(19) Europäisches Patentamt / European Patent Office / Office européen des brevets

(11) **EP 2 031 217 B1**

(12) **EUROPEAN PATENT SPECIFICATION**

(45) Date of publication and mention
of the grant of the patent:
**27.04.2011 Bulletin 2011/17**

(51) Int Cl.:
*F02D 41/02* (2006.01)       *F02D 41/14* (2006.01)
*F02D 41/40* (2006.01)       *F01N 3/023* (2006.01)
*F01N 9/00* (2006.01)

(21) Application number: **07253089.2**

(22) Date of filing: **31.07.2007**

(54) **System and method for outlet temperature control of an oxidation catalyst**

System und Verfahren zur Abgastemperatursteuerung eines Oxidationskatalysators

Système et procédé pour le contrôle de la température de sortie d'un catalyseur d'oxydation

(84) Designated Contracting States:
**AT BE BG CH CY CZ DE DK EE ES FI FR GB GR
HU IE IS IT LI LT LU LV MC MT NL PL PT RO SE
SI SK TR**

(43) Date of publication of application:
**04.03.2009 Bulletin 2009/10**

(73) Proprietor: **Delphi Technologies Holding S.à.r.l.**
**4940 Bascharage (LU)**

(72) Inventors:
• **Schmitt, Julien**
**57970 Kuntzig (FR)**
• **Parmentier, Michael**
**6747 Chatillon (BE)**

(74) Representative: **Gregory, John David Charles**
**Delphi Diesel Systems**
**Patent Department**
**Courteney Road**
**Gillingham**
**Kent ME8 0RU (GB)**

(56) References cited:
WO-A-2008/050051       DE-U1- 20 023 426
US-A1- 2004 226 288       US-A1- 2005 228 572
US-A1- 2005 241 301       US-A1- 2005 284 131

• HIROSHI INAGAKI ET AL: "AN ADAPTIVE FUEL
INJECTION CONTROL WITH INTERNAL MODEL
IN AUTOMOTIVE ENGINES" SIGNAL
PROCESSING AND SYSTEM CONTROL,
FACTORY AUTOMATION. PACIFIC GROVE, NOV.
27 - 30, 1990, PROCEEDINGS OF THE ANNUAL
CONFERENCE OF THE INDUSTRIAL
ELECTRONICS SOCIETY. (IECON), NEW YORK,
IEEE, US, vol. VOL. 1 CONF. 16, 27 November 1990
(1990-11-27), pages 78-83, XP000217101 ISBN:
0-87942-600-4

## Description

The present invention relates to outlet temperature control of an oxidation catalyst and particularly, but not exclusively, to outlet temperature control of an oxidation catalyst for use with a particulate filter regeneration system in diesel vehicle engines.

Regeneration of Diesel Particulate Filters (DPF) requires high exhaust gas temperatures (>550°C), which are not usual during normal operation of a diesel passenger car. In order to obtain such temperatures, a late injection of fuel in an engine cycle, called a post fuel injection, into the exhaust phase is used to introduce unburned fuel into a Diesel Oxidation Catalyst (DOC) to generate an exothermal reaction. As the DOC is located before the DPF, the increase in temperature of exhaust gas caused by the exothermal reaction in the DOC burns off particulate material in the DPF, enabling additional particulate material to be filtered. In order to reduce thermal stress on the DPF, the outlet temperature of the DOC (inlet of DPF) needs to be controller to substantially around a target value.

Control of the outlet temperature of the DOC is shown for instance in US 2005/0284131 and is usually performed by a closed loop controller, such as a standard PID (Proportional-Integral-Derivative) controller, using a temperature sensor at the DOC outlet, the amount of post fuel injection being selected from a table which gives a function of both engine speed and engine load, as well as some compensations for transient conditions.

This type of control has some disadvantages:

it is a non-linear system as the amount of post fuel injection is not proportional to the temperature at the DOC outlet;
variations of exhaust manifold temperatures and/or DOC inlet temperatures are not taken into account, which leads to lack of accuracy of the open-loop term;
variations of ambient conditions may not be taken into account;
delays introduced by the operation of DOC may amplify errors in closed-loop operation;
transient operating conditions, such as variations in speed or load of the engine, usually give different DOC outlet temperatures than corresponding steady state conditions for same speed and load;
any change in the calibration of EGR (Exhaust Gas Recirculation) rate, post injection timing, exhaust flow (throttling), requires a complete recalibration of the post fuel table; and
the only way to change the DOC outlet target temperature is to duplicate the calibration, that is, one complete calibration for 600°C and a further complete calibration for 550°C.

According to a first aspect of the present invention there is provided an oxidation catalyst temperature control system for an engine having an exhaust means including an oxidation catalyst comprising:

a temperature sensing means arranged to measure an inlet temperature of the oxidation catalyst;
an exhaust flow rate measurement means for obtaining an exhaust mass flow rate; and
a post fuel injection quantity calculation means,
wherein the post fuel injection quantity calculation means calculates a value representing a post quantity of fuel to be introduced to generate an exothermic reaction in the oxidation catalyst based on a pre-determined desired outlet temperature of the oxidation catalyst, the calculation using a steady state model of the oxidation catalyst (10), the steady state model utilising the exhaust mass flow rate, the inlet temperature of the oxidation catalyst and a transient compensation component and instruction means to instruct the post quantity of fuel to be introduced to the engine, wherein the transient compensation component is a function of stored energy in the oxidation catalyst and exhaust mass flow rate, characterised in that the steady state model (10) including the transient compensation component corresponds to the following equation:

$$\dot{q}_{post} = \frac{1}{1 - burn\_frac_{post}} \left[ \frac{\dot{m} \cdot c_p \cdot (T_o - T_i + \frac{dQ_m}{dt})}{(1 - \eta_{exh\_man}) \cdot \eta_{DOC} \cdot H} - \sum_i \dot{q}_{fi} \cdot (1 - burn\_frac_i) \right],$$

where $\dot{q}_{post}$ is the post fuel value, $T_o$ is the pre-determined desired outlet temperature, $T_i$ is the inlet temperature of the oxidation catalyst, $\dot{m}$ is the exhaust mass flow rate, $\sum_i \dot{q}_{fi}$ is the initial fuel value,

$$\left[ \sum_i \dot{q}_{fl} \cdot (1 - burn\_frac_i) \right]$$ is the total amount of unburned fuel leaving the engine except the post fuel value,

$(1-\eta_{exh\_man})$ is the first efficiency fraction, *(1-burn_frac_i)* is the second efficiency fraction, $c_p$ is the specific heat of the exhaust gas, *H* is the fuel heating value, $\eta_{DOC}$ is the exothermal efficiency for unburned fuel of the oxidation catalyst, and wherein $dQ_m/dt$ represents the change in stored energy associated with a change in exhaust mass flow rate.

Preferably, the steady state model further utilises an initial fuel value corresponding to the fuel introduced to the engine before the post quantity of fuel, a first efficiency fraction corresponding to the fuel burnt between the vehicle engine and the oxidation catalyst, a second efficiency fraction corresponding to the fuel burnt in the engine and a pre-determined desired outlet temperature of the oxidation catalyst.

Preferably, the oxidation catalyst temperature control system further comprises a memory means for storing calibrated values.

Preferably, the first efficiency fraction, the second efficiency fraction and the exothermal efficiency for unburned fuel of the oxidation catalyst are obtained from the stored calibrated values.

Preferably, the temperature sensing means further measures an engine outlet temperature and the relevant first efficiency fraction being selected based on engine outlet temperature from a set of pre-defined stored values defining the first efficiency fraction as a function of engine outlet temperature.

Preferably, the value for the exothermal efficiency for unburned fuel of the oxidation catalyst is selected based on the inlet temperature of the oxidation catalyst from a set of pre-defined stored values defining a value for the exothermal efficiency for unburned fuel of the oxidation catalyst as a function of inlet temperature of the oxidation catalyst.

Preferably, the relevant second efficiency fraction is selected based on an injection crank angle of the vehicle engine from a set of pre-defined stored values defining second efficiency fraction as a function of the injection crank angle.

Preferably, the derivative $dQ_m/dt$ is calculated by the difference between the stored energy $Q_m$ and a corresponding filtered value of $Q_m$. Alternatively, $Q_m$ can be selected based on the exhaust mass flow rate.

Preferably, the system further comprises a temperature based closed loop control.

Preferably, the temperature sensing means also measures an outlet temperature of the oxidation catalyst.

Preferably, the closed loop control comprises an internal process model.

Preferably, the internal process model is a second order filter associated with a pure delay.

Preferably, the second order filter is: $$Pm = \frac{e^{-T_d s}}{(1+T_1 s)(1+T_2 s)},$$ where $T_1$ and $T_2$ are filter time constants,

which are related to the oxidation catalysts thermal inertia and $T_d$ is a delay corresponding to the physical characteristics of the oxidation catalyst.

Preferably, the closed loop control comprises a first controller which receives the difference between the internal process model and the measured outlet temperature of the oxidation catalyst and outputs a first controller value which is subtracted from a set outlet temperature to create the pre-determined desired outlet temperature $T_o$.

Preferably, the first controller is a first order lag filter.

Preferably, the closed loop control comprises a second controller which controls the pre-determined desired outlet temperature $T_o$ before it is supplied to the internal process model and the steady state model. According to a second aspect of the present invention there is provided a method of controlling outlet temperature of an oxidation catalyst for an engine having an exhaust means comprising the steps of:

(i) sensing temperature at an inlet of the oxidation catalyst;

(ii) measuring an exhaust mass flow rate in the exhaust means;

(iii) calculating a value representing a post quantity of fuel to be introduced to the engine to generate an exothermic reaction in the oxidation catalyst based on a pre-determined desired outlet temperature of the oxidation catalyst, characterised in that the calculation representing the oxidation catalyst uses a steady state model and utilising the exhaust mass flow rate, the inlet temperature of the oxidation catalyst and compensating the steady state model for transients comprising calculating a compensating function dependent on stored energy in the oxidation catalyst and exhaust mass flow rate; and

(iv) instructing a quantity of fuel equivalent to the post fuel value to be introduced to the engine,

characterised in that the steady state model (10) corresponds to the following equation:

$$\dot{q}_{post} = \frac{1}{1 - burn\_frac_{post}} \left[ \frac{\dot{m} \cdot c_p \cdot (T_o - T_i + \frac{dQ_m}{dt})}{(1 - \eta_{exh\_man}) \cdot \eta_{DOC} \cdot H} - \sum_i \dot{q}_{fi} \cdot (1 - burn\_frac_i) \right],$$

where $\dot{q}_{post}$ is the post fuel value, $T_o$ is the pre-determined desired outlet temperature, $T_i$ is the inlet temperature of the oxidation catalyst, $\dot{m}$ is the exhaust mass flow rate, $\sum_i \dot{q}_{fi}$ is the initial fuel value, $\left[ \sum_i \dot{q}_{fi} \cdot (1 - burn\_frac_i) \right]$ is the total amount of unburned fuel leaving the engine except the post fuel value, $(1 - \eta_{exh\_man})$ is the first efficiency fraction, $(1 - burn\_frac_i)$ is the second efficiency fraction, $c_p$ is the specific heat of the exhaust gas, $H$ is the fuel heating value and $\eta_{DOC}$ is the exothermal efficiency for unburned fuel of the oxidation catalyst, and wherein $dQ_m/dt$ represents the change in stored energy associated with a change in exhaust mass flow rate.

Preferably, step (iii) further comprises utilising an initial fuel value corresponding to the fuel introduced to the engine before the post quantity of fuel, a first efficiency fraction corresponding to the fuel burnt between the vehicle engine and the oxidation catalyst, a second efficiency fraction corresponding to the fuel burnt in the engine and a pre-determined desired outlet temperature of the oxidation catalyst in the steady state model.

Preferably, the method further comprises storing calibrated values in a suitable memory means.

Preferably, step (iii) further comprises obtaining values for the first efficiency fraction, the second efficiency fraction and the exothermal efficiency for unburned fuel of the oxidation catalyst are from the stored calibrated values in the memory means.

Preferably, the method further comprises the step of measuring an engine outlet temperature and selecting the first efficiency fraction based on the engine outlet temperature from a set of pre-defined stored calibrated values defining the first efficiency fraction as a function of engine outlet temperature.

Preferably, the method further comprises the step of selecting the value for the exothermal efficiency for unburned fuel of the oxidation catalyst based on the inlet temperature of the oxidation catalyst from a set of pre-defined stored calibrated values defining the value for the exothermal efficiency for unburned fuel of the oxidation catalyst as a function of inlet temperature of the oxidation catalyst.

Preferably, the method further comprises the step of selecting the relevant second efficiency fraction based on the injection crank angle of the vehicle engine from a set of pre-defined calibrated stored values defining second efficiency fraction as a function of the injection crank angle.

Preferably, calculating the compensating function comprises calculating the derivative $dQ_m/dt$, which can be represented by the difference between the stored energy $Q_m$ and it's a corresponding filtered value of $Q_m$. Alternatively, $Q_m$ can be selected based on the exhaust mass flow rate.

Preferably, the method further comprises modifying the pre-determined desired outlet temperature using a closed loop feedback control.

Preferably, the method further comprises the step of measuring an outlet temperature of the oxidation catalyst.

Preferably, the closed loop feedback control comprises calculating an internal process model.

Preferably, the internal process model is a second order filter associated with a pure delay.

Preferably, the second order filter is: $Pm = \dfrac{e^{-T_d s}}{(1 + T_1 s)(1 + T_2 s)}$, where $T_1$ and $T_2$ are filter time constants, which are related to the oxidation catalysts thermal inertia and $T_d$ is a delay corresponding to the physical characteristics of the oxidation catalyst.

Preferably, the closed loop feedback control comprises performing a first controller calculation on the difference between the internal process model and the measured outlet temperature of the oxidation catalyst, outputting a first controller value, subtracting the first controller value from a set outlet temperature to create the pre-determined desired outlet temperature $T_o$.

Preferably, the first controller calculation is a first order lag filter.

Preferably, the closed loop control comprises performing a second controller calculation on the pre-determined desired outlet temperature $T_o$ before it is supplied to the internal process model and the steady state model.

According to a third aspect of the present invention there is provided a Diesel engine incorporating an oxidation catalyst outlet temperature control system according to the first aspect of the present invention for use in a particulate filter regeneration control system.

Embodiments of the present invention will now be described, by way of example only, with reference to the drawings, in which:

Fig. 1 is a representation of a oxidation catalyst in a particulate filter regeneration system;

Fig. 2A, 2B and 2C are calibration graphs for use in a steady state model of the oxidation catalyst;

Fig. 3 is a graph showing variations in temperature following a transient condition in a vehicle engine and a graph of temperature and oxidation catalyst length with respect to stored energy therein;

Fig. 4 is a graph of stored energy in a catalyst to exhaust mass flow rate for a particular oxidation catalyst and for use in a model of the oxidation catalyst;

Fig. 5 is a graph showing a step change in desired output temperature and the actual output temperature;

Fig. 6 is a graph of delay in change in output temperature versus exhaust mass flow rate; and

Fig. 7 shows a flow diagram of a closed loop control system and the model of the oxidation catalyst.

As discussed above, prior art solutions to temperature control of a particulate filter regeneration system for a vehicle engine tend to combine measurement of temperature at an oxidation catalyst's outlet with a look-up table giving a defined "post" fuel injection according to engine speed and load.

The present invention is based on an open-loop exothermal model of an oxidation catalyst. That is, a steady state model is used to calculate the quantity of "post" fuel required to generate an exothermal reaction in the oxidation catalyst which provides a required change in temperature at the oxidation catalyst outlet.

The following description may refer to typical reciprocal vehicular engines, but it should be understood that the invention is capable of being applied to any engine which requires a particulate filter capable of regeneration through elevated temperatures. For example, rather than a reciprocal engine, the engine could be a rotary Wankel engine. Furthermore, the fuel source is also unimportant, although it will be appreciated that Diesel engines are most likely to have a particulate filter and, as such, a particulate filter regeneration system fitted.

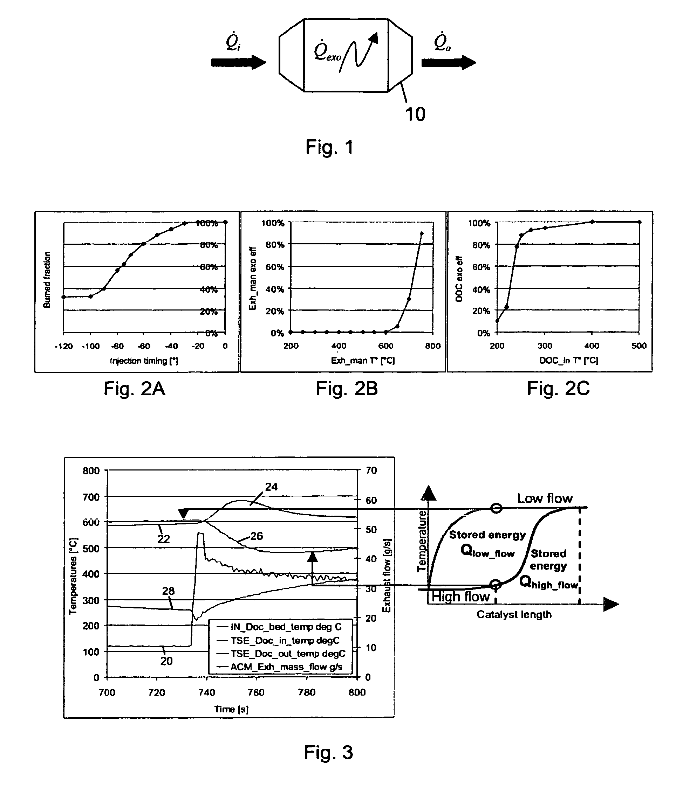

Referring to Fig. 1, the steady state model of an oxidation catalyst 10 can be represented by the energy associated with heat at the output of the oxidation catalyst 10 being equal to the heat energy at the input plus the heat energy from the exothermal reaction. This steady state model can be represented by equation 1.

$$(1) \qquad \dot{Q}_o = \dot{Q}_i + \dot{Q}_{exo}$$

Where $\dot{Q}_o$ is heat flow at the output of the oxidation catalyst 10, $\dot{Q}_i$ is heat flow at the input of the oxidation catalyst 10 and $\dot{Q}_{exo}$ is heat flow due to an exothermal reaction in the oxidation catalyst 10.

As $Q = \dot{m}c_p T$, equation 1 can be broken down as shown in equation 2.

$$(2) \qquad \dot{m} \cdot c_p \cdot T_o = \dot{m} \cdot c_p \cdot T_i + \dot{q}_{fDOC} \cdot \eta_{DOC} \cdot H$$

Where $q_{fDOC}$ is the unburned fuel at the oxidation catalyst inlet, $H$ is the fuel heating value, $\eta_{DOC}$ is the oxidation catalyst efficiency for unburned fuel (exothermal), $m$ is the exhaust mass flow rate, $c_p$ the specific heat of the exhaust gas, $T_o$ is the oxidation catalyst outlet temperature and $T_i$ is the oxidation catalyst inlet temperature.

The exhaust mass flow rate $m$ and the oxidation catalyst inlet temperature $T_i$ can be easily measured with a gas flow meter and temperature sensor respectively. The oxidation catalyst outlet temperature $T_o$ is the variable which must be controlled and therefore is pre-determined. As the specific heat of the exhaust gas $c_p$ and the fuel heating value $H$ are constants, this leaves only the unburned fuel at the oxidation catalyst inlet $q_{fDOC}$ and the oxidation catalyst efficiency

$\eta_{DOC}$ as unknown values.

The unburned fuel at the oxidation catalyst inlet $q_{fDOC}$ depends on the amount of fuel injected into the engine cylinder, the percentage of fuel injected which is burnt in the cylinder and the percentage of fuel burnt prior to reaching the oxidation catalyst (unburnt fuel from the engine cylinder can be burnt in the exhaust manifold, if the manifold is sufficiently hot).

So, the quantity of unburnt fuel exiting the cylinder can be represented by equation 3.

$$(3) \qquad \dot{q}_{fEO} = \sum_{pulses\_i} \dot{q}_{fi} \cdot (1 - burned\_fraction_i)$$

Where $q_{fEO}$ is the unburned fuel at exhaust valve, taking into account the burned fraction of each injection pulse "i", including the "post" fuel injection pulse.

We now have the quantity of fuel exiting the cylinder and equation 4 represents the unburned fuel at the oxidation catalyst inlet $q_{fDOC}$.

$$(4) \qquad \dot{q}_{fDOC} = \dot{q}_{fEO} \cdot (1 - \eta_{exh\_man})$$

Where $\eta_{exh\_man}$ is the "exothermal efficiency" of the exhaust manifold, which is the fraction of fuel burned between the exhaust valve and the oxidation catalyst 10.

Equation 2 can now be rearranged to give the temperature difference between the inlet and outlet of the oxidation catalyst 10, substituting equations 3 and 4 where appropriate, to give equation 5.

$$(5) \qquad T_o - T_i = \frac{1}{\dot{m} \cdot c_p}\left[\sum_i \dot{q}_{fi} \cdot (1 - burn\_frac_i)\right] \cdot (1 - \eta_{exh\_man}) \cdot \eta_{DOC} \cdot H$$

As shown in Fig. 2A, the traction of fuel burnt in each fuel injection $burn\_frac_i$ can then be obtained from a calibration for the particular engine, dependent on the position of the fuel injection in the engine cycle. Furthermore, as shown in Fig. 2B, the "exothermal efficiency" of the exhaust manifold $\eta_{exh\_man}$ is dependant on the temperature at the exhaust manifold and, as such, a calibration can again be performed. Measuring the temperature at the exhaust manifold will therefore enable calculation of its "exothermal efficiency". In the same manner, as shown in Fig. 2C, the oxidation catalyst efficiency $\eta_{DOC}$ is dependent on the inlet temperature of the oxidation catalyst 10. As this temperature is already being measured, or separately modelled, the inlet temperature can be used to also calculate the oxidation catalyst efficiency.

Rearranging equation 5, we can obtain the required post fuel pulse to give the desired output temperature of the oxidation catalyst, as shown in equation 6.

$$(6) \qquad \dot{q}_{post} = \frac{1}{1 - burn\_frac_{post}}\left[\frac{\dot{m} \cdot c_p \cdot (T_o - T_i)}{(1 - \eta_{exh\_man}) \cdot \eta_{DOC} \cdot H} - \sum_i \dot{q}_{fi} \cdot (1 - burn\_frac_i)\right]$$

To further improve the accuracy of the required post fuel injection, transient conditions may be considered. A certain amount of energy can be stored in the oxidation catalyst 10 depending on the flow conditions and the physical characteristics of the catalyst 10. A lower flow rate tends to store energy in the catalyst and a higher flow rate tends to release that stored energy, which gives the oxidation catalyst 10 a thermal inertia. Because the amount of stored energy can vary with flow rate, a transient from low flow rate to high flow rate can release the stored energy giving higher outlet temperatures than desired. If the outlet temperature of the oxidation catalyst is too high, the catalyst itself or a downstream particulate filter can be damaged.

Referring to Fig. 3, a transient in exhaust mass flow rate 20 is shown going from a steady state value of around 10g/s to about 50g/s before settling at around 33g/s. As a result of the increased flow, catalyst outlet temperature 22 rises from around 600˚C to around 680˚C before settling back to nearly 600˚C. Shaded area 24, under the catalyst outlet temperature 22, represents the release of the stored energy in the oxidation catalyst 10 due to the higher flow rate. The middle point temperature 26, that is the temperature in the middle of the catalyst, shows that the temperature distribution along the catalyst length changes with flow. This is represented by the graph of catalyst length versus temperature at the right hand side of Fig. 3.

Introducing this transient effect in equation 5 gives:

$$(7) \quad T_o - T_i = \frac{1}{\dot{m} \cdot c_p} \left[ \sum_i \dot{q}_{fi} \cdot (1 - burn\_frac_i) \right] \cdot (1 - \eta_{exh\_man}) \cdot \eta_{DOC} \cdot H - \frac{1}{\dot{m} \cdot c_p} \frac{dQ_m}{dt}$$

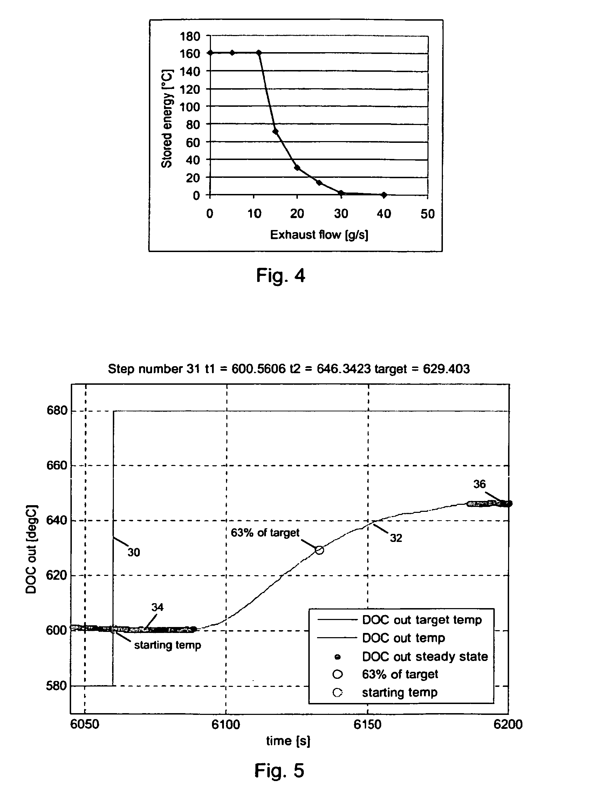

$dQ_m/dt$ is implemented via the calculation of $(Q_m - Q_{filtered})$ where $Q_{filtered}$ is a first order filter of $Q_m$ with a time constant depending on the exhaust flow. $Q_m$ is calibrated via a table depending on the exhaust flow, as shown in Fig. 4.

Once again, rearranging equation 7 to give the post fuel quantity gives equation 8.

$$(8) \quad \dot{q}_{post} = \frac{1}{1 - burn\_frac_{post}} \left[ \frac{\dot{m} \cdot c_p \cdot (T_o - T_i + \frac{dQ_m}{dt})}{(1 - \eta_{exh\_man}) \cdot \eta_{DOC} \cdot H} - \sum_i \dot{q}_{fi} \cdot (1 - burn\_frac_i) \right]$$

One of the biggest advantages of the open loop model as described above in terms of controls is the linearization of the system. This means that a temperature difference between inlet and outlet is selected and the same temperature difference is measured at the output of the oxidation catalyst, if the model is accurate. It also means that if the desired temperature difference is increased, the measured temperature increases by the same value.

In the real life operation of a particulate filter regeneration system, factors may cause the calibration of the open loop model to become inaccurate, such as any inaccuracies in assumptions made in the system or changes to the oxidation catalyst over time. As such, a closed loop control portion can be added to the system.

In this example, a closed loop controller portion controls the open loop model associated to the particular oxidation catalyst. This means that the closed loop controller works using temperatures and not injected fuel quantities nor engine operating conditions.

In transient operation, the oxidation catalyst is modelled as a second order filter associated to a delay :

$$(9) \quad Pm = \frac{e^{-T_d s}}{(1 + T_1 s)(1 + T_2 s)}$$

The filter time constants ($T_1$ and $T_2$) are related to the thermal inertia of the oxidation catalyst, the delay ($T_d$) is linked to the temperature distribution profile in the oxidation catalyst and s represents the "s-domain" of a Laplace transform function (that is, *Pm* is a Laplace transform). As described in relation to Fig. 3, the temperature distribution profile mostly depends on the exhaust flow rate. $T_1$, $T_2$ and $T_d$ can be derived from calibration tests by running an engine under different operating conditions and monitoring an oxidation catalyst.

Referring to Fig, 5, a step change on target temperature 30 of the oxidation catalyst outlet, results in a change in actual temperature 32 of the oxidation catalyst outlet from a first steady state level 34 to a second steady state level 36. As can be clearly seen from Fig. 5, there is a delay from the step change on the target temperature 30 to the increase of the actual temperature 32. Furthermore, the change of the actual temperature 32 is not instantaneous but gradual, meaning that the arrival at the second steady state level 36 is a significant time from the original step change of the target temperature 30. Although Fig. 5 shows differences between the target temperature 30 and the actual temperature 32 during steady state conditions, this is simply because the graph used in Fig. 5 was produced from real data but not using a fully calibrated steady state model. It should be appreciated that Fig. 5 demonstrates the delay between a step change in the target temperature 30 and the actual temperature 32 also changing, the actual temperature values being unimportant.

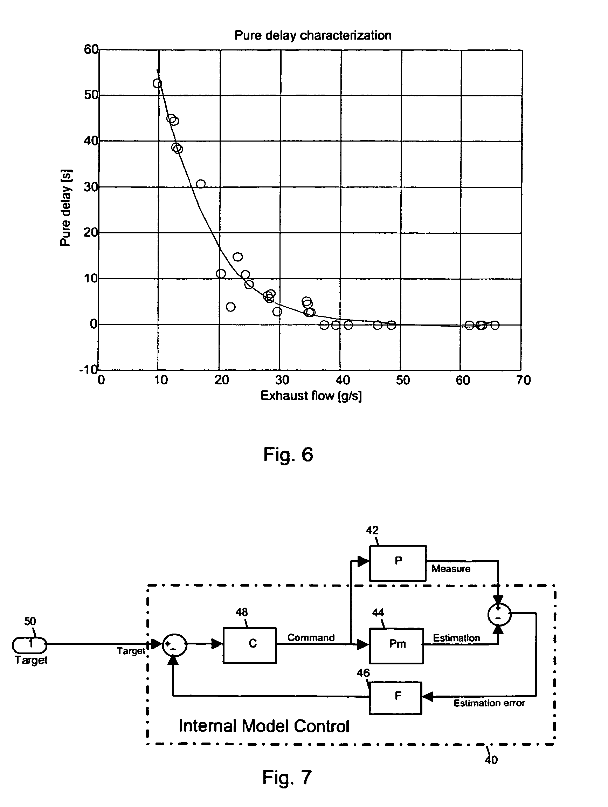

The delay shown in Fig. 5 is dependant on the exhaust mass flow rate and an example of the delay versus the exhaust mass flow rate for a particular oxidation catalyst is shown in Fig. 6. This can be obtained by simply applying at different operating points a step change in the target temperature.

As the delay is not negligible compared to the time constants of the process, classical control approaches, such as PID (Proportional-Integral-Derivative) controllers, are not appropriate. Accordingly, the closed loop control is performed using an internal model of the system.

Referring now to Fig. 7, a flow diagram showing a closed loop control system 40 and a steady state oxidation catalyst model 42, as described with relation to the open loop control above, is shown. The closed loop control system 40 comprises a closed loop internal process model 44, as represented by equation 9 above, a first perturbation rejection controller 46 and a second closed loop dynamics controller 48.

Compared to classical control approaches, there are two controllers 46 48 instead of one, as would be found in a typical PID controller.

The first controller 46 is used to control the perturbation rejection dynamics. If the process model 44 is perfect, it gives the response of the perturbation rejection. A perturbation can be an error not taken into account in the open loop model 42. All modelling errors are then rejected through the first controller 46. In this example, the first controller 46 is a first order lag filter. The associated time constant of a first order lag filter can be tuned for a compromise between best performance and robustness for the particular system.

The second controller 48 is used to control the closed loop dynamics. In the case of a DPF regeneration system, the temperature set point is constant or changes very slowly and there is no advantage in improving the response to a change in the set point. As such, second controller 48 is chosen to be a unity multiplier and has no effect. It can be envisaged that there may be a desire to improve the response time to the set point and, as such, the second controller 48 can then have an effect on the system.

In use, a target temperature 50 is set at the input to the system (the set point) and is fed through the second controller 48 to the internal process model 44 and the open loop model 42. The open loop model 42 will calculate an appropriate post fuel injection and deliver this accordingly. An outlet temperature is measured at the outlet to the oxidation catalyst in the system, which will correspond, in steady state at least, to the amount of post fuel injection. The internal process model 44 generates an estimation value which is then subtracted from the measured outlet temperature to generate an estimation error. The estimation error is fed in to the first controller 46 and the output of the first controller 46 is subtracted from the target temperature 50.

With closed loop control system 40, the target temperature 50 can be simply adjusted as required and the outlet temperature will respond accordingly because delays and other cruciai factors have been explicitly calibrated As such, the outlet temperature can be ramped slowly from no exothermal reaction to the target temperature 50 for a sensitive DPF, such as cordierite.

It will be appreciated that, although the specific example given above relates to a Diesel Particulate Filter, the present invention can be applied to any application for outlet temperature control of an oxidation catalyst. For example, elevated outlet temperatire control of an oxidation catalyst may be useful with Lean Nitrous oxides ($NO_x$) Traps (LNT) desulfation systems and for fast exhaust heat-up.

Further modifications and improvements may be made without departing from the scope of the present invention.

**Claims**

1. An oxidation catalyst temperature control system for an engine having an exhaust means including an oxidation catalyst comprising:

   a temperature sensing means arranged to measure an inlet temperature of the oxidation catalyst;
   an exhaust flow rate measurement means for obtaining an exhaust mass flow rate; and
   a post fuel injection quantity calculation means,
   wherein the post fuel injection quantity calculation means calculates a value representing a post quantity of fuel to be introduced to generate an exothermic reaction in the oxidation catalyst based on a pre-determined desired outlet temperature of the oxidation catalyst, the calculation using a steady state model of the oxidation catalyst (10), the steady state model utilising the exhaust mass flow rate, the inlet temperature of the oxidation catalyst and a transient compensation component and instruction means to instruct the post quantity of fuel to be introduced to the engine, wherein the transient compensation component is a function of stored energy in the oxidation catalyst and exhaust mass flow rate, **characterised in that** the steady state model (10) including the transient compensation component corresponds to the following equation:

$$\dot{q}_{post} = \frac{1}{1 - burn\_frac_{post}} \left[ \frac{\dot{m} \cdot c_p \cdot (T_o - T_i + \frac{dQ_m}{dt})}{(1 - \eta_{exh\_man}) \cdot \eta_{DOC} \cdot H} - \sum_i \dot{q}_{fl} \cdot (1 - burn\_frac_i) \right],$$

where $\dot{q}_{post}$ is the post fuel value, $T_o$ is the pre-determined desired outlet temperature, $T_i$ is the inlet temperature of the oxidation catalyst, $\dot{m}$ is the exhaust mass flow rate, $\sum_i \dot{q}_{fl}$ is the initial fuel value,

$\left[ \sum_i \dot{q}_{fl} \cdot (1 - burn\_frac_i) \right]$ is the total amount of unburned fuel leaving the engine except the post fuel value, $(1 - \eta_{exh\_man})$ is the first efficiency fraction, $(1 - burn\_frac_i)$ is the second efficiency fraction, $c_p$ is the specific heat of the exhaust gas, $H$ is the fuel heating value, $\eta_{DOC}$ is the exothermal efficiency for unburned fuel of the oxidation catalyst, and wherein $dQ_m/dt$ represents the change in stored energy associated with a change in exhaust mass flow rate.

2.  A system as claimed in claim 1, wherein the steady state model (10) further utilises an initial fuel value corresponding to the fuel introduced to the engine before the post quantity of fuel, a first efficiency fraction corresponding to the fuel burnt between the vehicle engine and the oxidation catalyst, a second efficiency fraction corresponding to the fuel burnt in the engine and a pre-determined desired outlet temperature of the oxidation catalyst.

3.  A system as claimed in claims 1 or 2, wherein the oxidation catalyst temperature control system further comprises a memory means for storing calibrated values.

4.  A system as claimed in claim 3, wherein the first efficiency fraction, the second efficiency fraction and the exothermal efficiency for unburned fuel of the oxidation catalyst are obtained from the stored calibrated values.

5.  A system as claimed in any of claims 2 to 4, wherein the temperature sensing means further measures an engine outlet temperature and the relevant first efficiency fraction being selected based on engine outlet temperature from a set of pre-defined stored values defining the first efficiency fraction as a function of engine outlet temperature.

6.  A system as claimed in any of claims 2 to 5, wherein the value for the exothermal efficiency for unburned fuel of the oxidation catalyst is selected based on the inlet temperature of the oxidation catalyst from a set of pre-defined stored values defining a value for the exothermal efficiency for unburned fuel of the oxidation catalyst as a function of inlet temperature of the oxidation catalyst.

7.  A system as claimed in any of claims 2 to 6, wherein the relevant second efficiency fraction is selected based on an injection crank angle of the vehicle engine from a set of pre-defined stored values defining second efficiency fraction as a function of the injection crank angle.

8.  A system as claimed in any preceding claim, wherein the derivative $dQ_m/dt$ is calculated by the difference between the stored energy $Q_m$ and a corresponding filtered value of $Q_m$.

9.  A system as claimed in claim 8, wherein $Q_m$ is selected based on a function of exhaust mass flow rate.

10. A system as claimed in any preceding claim, wherein the temperature sensing means also measures an outlet temperature of the oxidation catalyst.

11. A system as claimed in any preceding claim, wherein the system further comprises a temperature based closed loop control (40).

12. A system as claimed in claim 11, wherein the closed loop control (40) comprises an internal process model (144).

13. A system as claimed in claim 12, wherein the internal process model (44) is a second order filter associated with a pure delay.

14. A system as claimed in claim 13, wherein the second order filter is:

$$Pm = \frac{e^{-T_d s}}{(1+T_1 s)(1+T_2 s)},$$ where $T_1$ and $T_2$ are filter time constants,

which are related to the oxidation catalysts thermal inertia and $T_d$ is a delay corresponding to the physical characteristics of the oxidation catalyst.

15. A system as claimed in any of claims 11 to 14 when dependent on claim 10, wherein the closed loop control comprises a first controller which receives the difference between the internal process model (44) and the measured outlet temperature of the oxidation catalyst and outputs a first controller value which is subtracted from a set outlet temperature to create the pre-determined desired outlet temperature $T_o$.

16. A system as claimed in claim 15, wherein the first controller (46) is a first order lag filter.

17. A system as claimed in any of claims 11 to 16, wherein the closed loop control (40) comprises a second controller (48) which controls the pre-determined desired outlet temperature $T_o$ before it is supplied to the internal process model and the steady state model.

18. A method of controlling an outlet temperature of an oxidation catalyst for an engine having an exhaust means including an oxidation catalyst comprising the steps of:

(i) sensing temperature at an inlet of the oxidation catalyst;
(ii) measuring an exhaust mass flow rate in the exhaust means;
(iii) calculating a value representing a post quantity of fuel to be introduced to the engine to generate an exothermic reaction in the oxidation catalyst based on a pre-determined desired outlet temperature of the oxidation catalyst, **characterised in that** the calculation representing the oxidation catalyst uses a steady state model utilising the exhaust mass flow rate, the inlet temperature of the oxidation catalyst and compensating the steady state model for transients comprising calculating a compensating function dependent on stored energy in the oxidation catalyst and exhaust mass flow rate; and
(iv) instructing a quantity of fuel equivalent to the post fuel value to be introduced to the engine,
**characterised in that** the steady state model (10) corresponds to the following equation:

$$\dot{q}_{post} = \frac{1}{1-burn\_frac_{post}} \left[ \frac{\dot{m} \cdot c_p \cdot (T_o - T_i + \frac{dQ_m}{dt})}{(1-\eta_{exh\_man}) \cdot \eta_{DOC} \cdot H} - \sum_i \dot{q}_{fi} \cdot (1-burn\_frac_i) \right],$$

where $\dot{q}_{post}$ is the post fuel value, $T_o$ is the pre-determined desired outlet temperature, $T_i$ is the inlet temperature of the oxidation catalyst, $\dot{m}$ is the exhaust mass flow rate, $\sum_i \dot{q}_{fi}$ is the initial fuel value,

$\left[ \sum_i \dot{q}_{fi} \cdot (1-burn\_frac_i) \right]$ is the total amount of unburned fuel leaving the engine except the post fuel

value, $(1-\eta_{exh\_man})$ is the first efficiency fraction, $(1-burn\_frac_i)$ is the second efficiency fraction, $c_p$ is the specific heat of the exhaust gas, $H$ is the fuel heating value and $\eta_{DOC}$ is the exothermal efficiency for unburned fuel of the oxidation catalyst, and wherein $dQ_m/dt$ represents the change in stored energy associated with a change in exhaust mass flow rate.

19. A method as claimed in claim 18, wherein step (iii) further comprises utilising an initial fuel value corresponding to the fuel introduced to the engine before the post quantity of fuel, a first efficiency fraction corresponding to the fuel burnt between the vehicle engine and the oxidation catalyst, a second efficiency fraction corresponding to the fuel burnt in the engine and a pre-determined desired outlet temperature of the oxidation catalyst in the steady state model.

20. A method as claimed in any of claim 18 or 19, wherein the method further comprises storing calibrated values in a suitable memory means.

21. A method as claimed in claim 20, wherein step (iii) further comprises obtaining values for the first efficiency fraction, the second efficiency fraction and the exothermal efficiency for unburned fuel of the oxidation catalyst are from the stored calibrated values in the memory means.

22. A method as claimed in any of claims 19 to 21, wherein the method further comprises the step of measuring an engine outlet temperature and selecting the first efficiency fraction based on the engine outlet temperature from a set of pre-defined stored calibrated values defining the first efficiency fraction as a function of engine outlet temperature.

23. A method as claimed in any of claims 18 to 22, wherein the method further comprises the step of selecting the value for the exothermal efficiency for unburned fuel of the oxidation catalyst based on the inlet temperature of the oxidation catalyst from a set of pre-defined stored calibrated values defining the value for the exothermal efficiency for unburned fuel of the oxidation catalyst as a function of inlet temperature of the oxidation catalyst.

24. A method as claimed in any of claims 19 to 23, wherein the method further comprises the step of selecting the relevant second efficiency fraction based on an injection crank angle of the vehicle engine from a set of pre-defined calibrated stored values defining second efficiency fraction as a function of the injection crank angle.

25. A method as claimed in of claims 18 to 24, wherein calculating the compensating function comprises calculating the derivative $dQ_m/dt$, which can be represented by the difference between the stored energy $Q_m$ and it's a corresponding filtered value of $Q_m$.

26. A method as claimed in claim 25, wherein $Q_m$ can be selected based on a function of exhaust mass flow rate.

27. A method as claimed in any of claims 18 to 26, wherein the method further comprises the step of measuring an outlet temperature of the oxidation catalyst.

28. A method as claimed in any of claims 18 to 27, wherein the method further comprises modifying the pre-determined desired outlet temperature using a closed loop feedback control.

29. A method as claimed in claim 28, wherein the closed loop feedback control comprises calculating an internal process model.

30. A method as claimed in claim 29, wherein the internal process model is a second order filter associated with a pure delay.

31. A method as claimed in claim 30, wherein the second order filter is:

$$Pm = \frac{e^{-T_d s}}{(1+T_1 s)(1+T_2 s)},$$ where $T_1$ and $T_2$ are filter time constants,

which are related to the oxidation catalysts thermal inertia and $T_d$ is a delay corresponding to the physical characteristics of the oxidation catalyst.

32. A method as claimed in any of claims 28 to 31 when dependent on claim 27, wherein the closed loop feedback control comprises performing a first controller calculation on the difference between the internal process model and the measured outlet temperature of the oxidation catalyst, outputting a first controller value, subtracting the first controller value from a set outlet temperature to create the pre-determined desired outlet temperature $T_o$.

**33.** A method as claimed in claim 32, wherein the first controller calculation is a first order lag filter.

**34.** A method as claimed in any of claims 28 to 33, wherein the closed loop control comprises performing a second controller calculation on the pre-determined desired outlet temperature $T_o$ before it is supplied to the internal process model and the steady state model.

**35.** A diesel engine incorporating an oxidation catalyst outlet temperature control system according to claims 1 to 17 for use in a particulate filter regeneration control system.

**Patentansprüche**

**1.** System zur Regelung der Temperatur eines Oxidationskatalysators für einen Motor, der eine Abgaseinrichtung mit einem Oxidationskatalysator hat, umfassend:

eine Temperaturfühlereinrichtung, die zum Messen einer Einlasstemperatur des Oxidationskatalysators angeordnet ist,
eine Abgasdurchflussmesseinrichtung zum Erhalten eines Abgasmassendurchflusses und
eine Einrichtung zum Berechnen der Kraftstoffnacheinspritzungsmenge,
wobei die Einrichtung zum Berechnen der Kraftstoffnacheinspritzungsmenge einen Wert berechnet, der eine Kraftstoffnacheinspritzungsmenge repräsentiert, die zum Erzeugen einer exothermen Reaktion in dem Oxidationskatalysator auf der Basis einer vorbestimmten gewünschten Auslasstemperatur des Oxidationskatalysators einzuführen ist, wobei die Berechnung ein Steady-State-Modell des Oxidationskatalysators (10) verwendet, wobei das Steady-State-Modell den Abgasmassendurchfluss, die Einlasstemperatur des Oxidationskatalysators und eine Übergangs-Kompensationskomponente und eine Anweisungseinrichtung zum Anweisen der in den Motor einzuführenden Kraftstoffnacheinspritzungsmenge nutzt, wobei die Übergangs-Kompensationskomponente eine Funktion der gespeicherten Energie in dem Oxidationskatalysator und des Abgasmassendurchflusses ist, **dadurch gekennzeichnet, dass** das die Übergangs-Kompensationskomponente aufweisende Steady-State-Modell (10) der folgenden Gleichung entspricht:

$$\dot{q}_{post} = \frac{1}{1 - burn\_frac_{post}} \left[ \frac{\dot{m} \cdot c_p \cdot (T_o - T_i + \frac{dQ_m}{dt})}{(1 - \eta_{exh\_man}) \cdot \eta_{DOC} \cdot H} - \sum_i \dot{q}_{fi} \cdot (1 - burn\_frac_i) \right],$$

wobei $\dot{q}_{post}$ der Kraftstoffnacheinspritzungswert ist, $T_o$ die vorbestimmte gewünschte Auslasstemperatur ist, $T_i$ die Einlasstemperatur des Oxidationskatalysators ist, $\dot{m}$ der Abgasmassendurchfluss ist, $\sum_i \dot{q}_{fi}$ der anfängliche Kraftstoffwert ist, $\left[ \sum_i \dot{q}_{fi} \cdot (1 - burn\_frac_i) \right]$ die den Motor verlassende Gesamtmenge an unverbranntem Kraftstoff außer dem *Kraftstoffnacheinspritzungswert ist,* (1-$\eta_{exh\_man}$) der erste Wirkungsgradanteil ist, (1-*burn_frac_i*) der zweite Wirkungsgradanteil ist, $c_p$ die spezifische Wärme des Abgases ist, *H* der Kraftstoffheizwert ist, $\eta_{DOC}$ der exotherme Wirkungsgrad für unverbrannten Kraftstoff des Oxidationskatalysators ist und wobei $dQ_m/dt$ die mit einer Änderung des Abgasmassendurchflusses verbundene Änderung der gespeicherten Energie repräsentiert.

**2.** System nach Anspruch 1, bei dem das Steady-State-Modell (10) ferner einen anfänglichen Kraftstoffwert, der dem vor der Kraftstoffnacheinspritzungsmenge in den Motor eingeführten Kraftstoff entspricht, einen ersten Wirkungsgradanteil, der dem zwischen dem Fahrzeugmotor und dem Oxidationskatalysator verbrannten Kraftstoff entspricht, einen zweiten Wirkungsgradanteil, der dem im Motor verbrannten Kraftstoff entspricht, und eine vorbestimmte gewünschte Auslasstemperatur des Oxidationskatalysators nutzt.

**3.** System nach Anspruch 1 oder 2, bei dem das System zur Regelung der Oxidationskatalysatortemperatur ferner eine Speichereinrichtung zum Speichern kalibrierter Werte aufweist.

**4.** System nach Anspruch 3, bei dem der erste Wirkungsgradanteil, der zweite Wirkungsgradanteil und der exotherme Wirkungsgrad für unverbrannten Kraftstoff des Oxidationskatalysators aus den gespeicherten kalibrierten Werten erhalten werden.

**5.** System nach einem der Ansprüche 2 bis 4, bei dem die Temperaturfühlereinrichtung ferner eine Motorauslasstemperatur misst und der relevante erste Wirkungsgradanteil auf der Basis der Motorauslasstemperatur aus einem Satz von vordefinierten gespeicherten Werten gewählt ist, die den ersten Wirkungsgradanteil als eine Funktion der Motorauslasstemperatur definieren.

**6.** System nach einem der Ansprüche 2 bis 5, bei dem der Wert für den exothermen Wirkungsgrad für unverbrannten Kraftstoff des Oxidationskatalysators auf der Basis der Einlasstemperatur des Oxidationskatalysators aus einem Satz von vordefinierten gespeicherten Werten gewählt ist, die einen Wert für den exothermen Wirkungsgrad für unverbrannten Kraftstoff des Oxidationskatalysators als eine Funktion der Einlasstemperatur des Oxidationskatalysators definieren.

**7.** System nach einem der Ansprüche 2 bis 6, bei dem der relevante zweite Wirkungsgradanteil auf der Basis eines Kurbelwinkels der Einspritzung des Fahrzeugmotors aus einem Satz vordefinierter gespeicherter Werte gewählt ist, die den zweiten Wirkungsgradanteil als eine Funktion des Kurbelwinkels der Einspritzung definieren.

**8.** System nach einem der vorhergehenden Ansprüche, bei dem die Ableitung $dQ_m/dt$ anhand der Differenz zwischen der gespeicherten Energie $Q_m$ und einem entsprechenden gefilterten Wert $Q_m$. berechnet wird.

**9.** System nach Anspruch 8, bei dem $Q_m$ auf der Basis einer Funktion des Abgasmassendurchflusses gewählt ist.

**10.** System nach einem der vorhergehenden Ansprüche, bei dem die Temperaturfühlereinrichtung auch eine Auslasstemperatur des Oxidationskatalysators misst.

**11.** System nach einem der vorhergehenden Ansprüche, bei dem das System ferner eine temperaturbasierte Regelung im geschlossenen Regelkreis (40) aufweist.

**12.** System nach Anspruch 11, bei dem die Regelung im geschlossenen Regelkreis (40) ein internes Prozessmodell (144) aufweist.

**13.** System nach Anspruch 12, bei dem das interne Prozessmodell (44) ein mit einer reinen Verzögerung assoziiertes Filter zweiter Ordnung ist.

**14.** System nach Anspruch 13, bei dem das Filter zweiter Ordnung wie folgt ist:

$$Pm = \frac{e^{-T_d s}}{(1 + T_1 s)(1 + T_2 s)}$$ , wobei $T_1$ und $T_2$ Filterzeitkonstanten sind, die

mit der thermischen Trägheit des Oxidationskatalysators in Bezug stehen, und $T_d$ eine Verzögerung entsprechend der physikalischen Eigenschaften des Oxidationskatalysators ist.

**15.** System nach einem der vorhergehenden Ansprüche 11 bis 14, wenn abhängig von Anspruch 10, wobei die Regelung im geschlossenen Regelkreis eine erste Steuerung aufweist, die die Differenz zwischen dem internen Prozessmodell (44) und der gemessenen Auslasstemperatur des Oxidationskatalysators erhält und einen ersten Steuerungswert ausgibt, der von einer Soll-Auslasstemperatur subtrahiert wird, um die vorbestimmte gewünschte Auslasstemperatur $T_o$ zu schaffen.

**16.** System nach Anspruch 15, bei dem die erste Steuerung (46) ein Verzögerungsfilter erster Ordnung ist.

**17.** System nach einem der Ansprüche 11 bis 16, bei dem die Regelung im geschlossenen Regelkreis (40) eine zweite Steuerung (48) aufweist, welche die vorbestimmte gewünschte Auslasstemperatur $T_o$ regelt, bevor sie an das interne Prozessmodell und das Steady-State-Modell angelegt wird.

18. Verfahren zum Regeln einer Auslasstemperatur eines Oxidationskatalysators für einen Motor, der eine Abgaseinrichtung mit einem Oxidationskatalysator hat, das die folgenden Schritte beinhaltet:

(i) Erfassen der Temperatur an einem Einlass des Oxidationskatalysators,
(ii) Messen eines Abgasmassendurchflusses in der Abgaseinrichtung,
(iii) Berechnen eines Wertes, der eine Kraftstoffnacheinspritzungsmenge repräsentiert, die zur Erzeugung einer exothermen Reaktion in dem Oxidationskatalysator auf Basis einer vorbestimmten gewünschten Auslasstemperatur des Oxidationskatalysators in den Motor eingeführt werden soll, **dadurch gekennzeichnet, dass** die den Oxidationskatalysator repräsentierende Berechnung ein Steady-State-Modell verwendet, das den Abgasmassendurchfluss, die Einlasstemperatur des Oxidationskatalysators und Übergangskompensieren des Steady-State-Modells nutzt, das die Berechnung einer Kompensationsfunktion auf der Basis von in dem Oxidationskatalysator gespeicherter Energie und dem Abgasmassendurchfluss beinhaltet und
(iv) Anweisen der Einführung einer mit dem Kraftstoffnacheinspritzungswert gleichwertigen Kraftstoffmenge in den Motor,
**dadurch gekennzeichnet, dass** das Steady-State-Modell (10) der folgenden Gleichung entspricht:

$$\dot{q}_{post} = \frac{1}{1 - burn\_frac_{post}} \left[ \frac{\dot{m} \cdot c_p \cdot (T_o - T_i + \frac{dQ_m}{dt})}{(1 - \eta_{exh\_man}) \cdot \eta_{DOC} \cdot H} - \sum_i \dot{q}_{fi} \cdot (1 - burn\_frac_i) \right],$$

wobei $\dot{q}_{post}$ der Kraftstoffnacheinspritzungswert ist, $T_o$ die vorbestimmte gewünschte Auslasstemperatur ist, $T_i$ die Einlasstemperatur des Oxidationskatalysators ist, $\dot{m}$ der Abgasmassendurchfluss ist, $\sum_i \dot{q}_{fi}$ der anfängliche Kraftstoffwert ist, $\left[ \sum_i \dot{q}_{fi} \cdot (1 - burn\_frac_i) \right]$ die den Motor verlassende Gesamtmenge an unverbranntem Kraftstoff außer dem Kraftstoffnacheinspritzungswert ist, $(1 - \eta_{exh\_man})$ der erste Wirkungsgradanteil ist, $(1 - burn\_frac_i)$ der zweite Wirkungsgradanteil ist, $c_p$ die spezifische Wärme des Abgases ist, $H$ der Kraftstoffheizwert ist und $\eta_{DOC}$ der exotherme Wirkungsgrad für unverbrannten Kraftstoff des Oxidationskatalysators ist und wobei $dQ_m/dt$ die mit einer Änderung des Abgasmassendurchflusses verbundene Änderung der gespeicherten Energie repräsentiert.

19. Verfahren nach Anspruch 18, bei dem Schritt (iii) ferner das Nutzen eines anfänglichen Kraftstoffwertes, der dem vor der Kraftstoffnacheinspritzungsmenge in den Motor eingeführten Kraftstoff entspricht, eines ersten Wirkungsgradanteils, der dem zwischen dem Fahrzeugmotor und dem Oxidationskatalysator verbrannten Kraftstoff entspricht, eines zweiten Wirkungsgradanteils, der dem im Motor verbrannten Kraftstoff entspricht, und einer vorbestimmten gewünschten Auslasstemperatur des Oxidationskatalysators in dem Steady-State-Modell beinhaltet.

20. Verfahren nach einem der Ansprüche 18 oder 19, wobei das Verfahren ferner das Speichern kalibrierter Werte in einer geeigneten Speichereinrichtung beinhaltet.

21. Verfahren nach Anspruch 20, bei dem Schritt (iii) ferner das Beschaffen von Werten für den ersten Wirkungsgradanteil, den zweiten Wirkungsgradanteil und den exothermen Wirkungsgrad für unverbrannten Kraftstoff des Oxidationskatalysators aus den gespeicherten kalibrierten Werten in der Speichereinrichtung beinhaltet.

22. Verfahren nach einem der Ansprüche 19 bis 21, wobei das Verfahren ferner den Schritt des Messens einer Motorauslasstemperatur und des Wählens des ersten Wirkungsgradanteils auf der Basis der Motorauslasstemperatur aus einem Satz von vordefinierten gespeicherten kalibrierten Werten beinhaltet, die den ersten Wirkungsgradanteil als eine Funktion der Motorauslasstemperatur definieren.

**23.** Verfahren nach einem der Ansprüche 18 bis 22, wobei das Verfahren ferner den Schritt des Wählens des Wertes für den exothermen Wirkungsgrad für unverbrannten Kraftstoff des Oxidationskatalysators auf der Basis der Einlasstemperatur des Oxidationskatalysators aus einem Satz vordefinierter gespeicherter kalibrierter Werte beinhaltet, die den Wert für den exothermen Wirkungsgrad für unverbrannten Kraftstoff des Oxidationskatalysators als eine Funktion der Einlasstemperatur des Oxidationskatalysators definieren.

**24.** Verfahren nach einem der Ansprüche 19 bis 23, wobei das Verfahren ferner den Schritt des Wählens des relevanten zweiten Wirkungsgradanteils auf der Basis eines Kurbelwinkels der Einspritzung des Fahrzeugmotors aus einem Satz vordefinierter kalibrierter gespeicherter Werte beinhaltet, die den zweiten Wirkungsgradanteil als eine Funktion des Kurbelwinkels der Einspritzung definieren.

**25.** Verfahren nach einem der Ansprüche 18 bis 24, bei dem das Berechnen der Kompensationsfunktion das Berechnen der Ableitung $dQ_m/dt$ beinhaltet, die mit der Differenz zwischen der gespeicherten Energie $Q_m$ und ihrem entsprechenden gefilterten Wert $Q_m$. repräsentiert werden kann.

**26.** Verfahren nach Anspruch 25, bei dem $Q_m$ auf der Basis einer Funktion des Abgasmassendurchflusses gewählt werden kann.

**27.** Verfahren nach einem der Ansprüche 18 bis 26, wobei das Verfahren ferner den Schritt des Messens einer Auslasstemperatur des Oxidationskatalysators beinhaltet.

**28.** Verfahren nach einem der Ansprüche 18 bis 27, wobei das Verfahren ferner das Modifizieren der vorbestimmten gewünschten Auslasstemperatur mithilfe einer Regelung mit geschlossener Rückführung beinhaltet.

**29.** Verfahren nach Anspruch 28, bei dem die Regelung mit geschlossener Rückführung das Berechnen eines internen Prozessmodells beinhaltet.

**30.** Verfahren nach Anspruch 29, bei dem das interne Prozessmodell ein mit einer reinen Verzögerung assoziiertes Filter zweiter Ordnung ist.

**31.** Verfahren nach Anspruch 30, bei dem das Filter zweiter Ordnung wie folgt ist:

$$Pm = \frac{e^{-T_d s}}{(1 + T_1 s)(1 + T_2 s)},$$ wobei $T_1$ und $T_2$ Filterzeitkonstanten sind, die

mit der thermischen Trägheit des Oxidationskatalysators in Bezug stehen, und $T_d$ eine Verzögerung entsprechend der physikalischen Eigenschaften des Oxidationskatalysators ist.

**32.** Verfahren nach einem der Ansprüche 28 bis 31, wenn abhängig von Anspruch 27, wobei die Regelung mit geschlossener Rückführung das Durchführen einer ersten Steuerungsberechnung an der Differenz zwischen dem internen Prozessmodell und der gemessenen Auslasstemperatur, das Ausgeben eines ersten Steuerungswertes, das Subtrahieren des ersten Steuerungswertes von einer Soll-Auslasstemperatur zum Erzeugen der vorbestimmten gewünschten Auslasstemperatur $T_o$ beinhaltet.

**33.** Verfahren nach Anspruch 32, bei dem die erste Steuerungsberechnung ein Verzögerungsfilter erster Ordnung ist.

**34.** Verfahren nach einem der Ansprüche 28 bis 33, bei dem die Regelung im geschlossenen Regelkreis das Durchführen einer zweiten Steuerungsberechnung an der vorbestimmten gewünschten Auslasstemperatur $T_o$, bevor sie an das interne Prozessmodell und das Steady-State-Modell angelegt wird, beinhaltet.

**35.** Dieselmotor, der ein System zur Regelung der Auslasstemperatur eines Oxidationskatalysators nach einem der Ansprüche 1 bis 17 zur Verwendung in einem Steuersystem zur Partikelfilter-Regeneration beinhaltet.

**Revendications**

**1.** Système de commande de température d'un catalyseur d'oxydation pour un moteur ayant un système d'échappement incluant un catalyseur d'oxydation, comprenant :

un moyen capteur de température agencé pour mesurer une température d'entrée du catalyseur d'oxydation ;
un moyen de mesure de débit d'échappement pour obtenir un débit massique d'échappement ; et
un moyen de calcul d'une quantité de carburant post-injecté,
dans lequel le moyen de calcul d'une quantité de carburant post-injecté calcule une valeur représentant une quantité de carburant post-injecté à introduire pour générer une réaction exothermique dans le catalyseur d'oxydation en se basant sur une température de sortie désirée prédéterminée du catalyseur d'oxydation, le calcul utilisant un modèle d'état permanent du catalyseur d'oxydation (10), le modèle d'état permanent utilisant le débit massique d'échappement, la température d'entrée du catalyseur d'oxydation, et une composante de compensation transitoire et des moyens d'instruction pour donner instruction de l'introduction de la quantité de carburant post-injecté dans le moteur, dans lequel la composante de compensation transitoire est une fonction de l'énergie stockée dans le catalyseur d'oxydation et du débit massique d'échappement,
**caractérisé en ce que** le modèle d'état permanent (10) y compris et la composante de compensation transitoire correspond à l'équation suivante :

$$\dot{q}_{post} = \frac{1}{1 - burn\_frac_{post}} \left[ \frac{\dot{m} \cdot c_p \cdot (T_o - T_i + \frac{dQ_m}{dt})}{(1 - \eta_{exh\_man}) \cdot \eta_{DOC} \cdot H} - \sum_i \dot{q}_{fi} \cdot (1 - burn\_frac_i) \right],$$

dans laquelle $\dot{q}_{post}$ est la valeur de carburant post-injecté, *To* est la température de sortie désirée prédéterminée, *Ti* est la température d'entrée du catalyseur d'oxydation, $\dot{m}$ est le débit massique d'échappement, $\sum_i \dot{q}_{fi}$ est la valeur initiale du carburant, $\left[ \sum_i \dot{q}_{fi} \cdot (1 - burn\_frac_i) \right]$ est la quantité totale de carburant non brûlé quittant le moteur, à l'exception de la valeur de carburant post-injecté, (1-$\eta_{exh\_man}$) est la première fraction d'efficacité, (1-*burn_frac_i*) est la seconde fraction d'efficacité, *Cp* est la chaleur spécifique des gaz d'échappement, *H* est la valeur de chauffage du carburant, $\eta_{DOC}$ est l'efficacité exothermique pour du carburant non brûlé du catalyseur d'oxydation, et dans laquelle *dQm/dt* représente le changement dans l'énergie stockée associée avec un changement dans le débit massique d'échappement.

2. Système selon la revendication 1, dans lequel le modèle d'état permanent (10) utilise en outre une valeur initiale du carburant correspondant au carburant introduit dans le moteur avant la quantité de carburant post-injecté, une première fraction d'efficacité correspondant au carburant brûlé entre le moteur du véhicule et le catalyseur d'oxydation, une seconde fraction d'efficacité correspondant au carburant brûlé dans le moteur et une température de sortie désirée prédéterminée du catalyseur d'oxydation.

3. Système selon la revendication 1 ou 2, dans lequel le système de commande de température de catalyseur d'oxydation comprend en outre un moyen à mémoire pour stocker des valeurs calibrées.

4. Système selon la revendication 3, dans lequel la première fraction d'efficacité, la seconde fraction d'efficacité et l'efficacité exothermique pour du carburant non brûlé du catalyseur d'oxydation sont obtenues à partir des valeurs calibrées stockées.

5. Système selon l'une quelconque des revendications 2 à 4, dans lequel le moyen de détection de température mesure en outre une température de sortie du moteur, et la première fraction d'efficacité pertinente est choisie en se basant sur la température de sortie du moteur à partir d'un groupe de valeurs stockées prédéfinies qui définissent la première fraction d'efficacité en fonction de la température de sortie du moteur.

6. Système selon l'une quelconque des revendications 2 à 5, dans lequel la valeur pour l'efficacité exothermique pour du carburant non brûlé du catalyseur d'oxydation est choisie en se basant sur la température d'entrée du catalyseur d'oxydation à partir d'un groupe de valeurs stockées prédéfinies qui définissent une valeur pour l'efficacité exothermique pour du carburant non brûlé du catalyseur d'oxydation en tant que fonction de la température d'entrée du catalyseur d'oxydation.

7.  Système selon l'une quelconque des revendications 2 à 6, dans lequel la seconde fraction d'efficacité pertinente est choisie en se basant sur un angle de vilebrequin pour l'injection dans le moteur du véhicule à partir d'un groupe de valeurs stockées prédéfinies qui définissent une seconde fraction efficacité en tant que fonction de l'angle de vilebrequin pour l'injection.

8.  Système selon l'une quelconque des revendications précédentes, dans lequel la dérivée $dQm/dt$ est calculée par la différence entre l'énergie stockée $Qm$ et une valeur filtrée correspondante de $Qm$.

9.  Système selon la revendication 8, dans lequel $Qm$ est choisi en se basant sur une fonction du débit massique d'échappement.

10. Système selon l'une quelconque des revendications précédentes, dans lequel le moyen de détection de température mesure également une température de sortie du catalyseur d'oxydation.

11. Système selon l'une quelconque des revendications précédentes, dans lequel le système comprend en outre une commande en boucle fermée (40) basée sur la température.

12. Système selon la revendication 11, dans lequel la commande en boucle fermée (40) comprend un modèle de processus interne (144).

13. Système selon la revendication 12, dans lequel le modèle de processus interne (44) est un filtre de second ordre associé à un pur retard.

14. Système selon la revendication 13, dans lequel le filtre de second ordre est :

$$Pm = \frac{e^{-T_d s}}{(1 + T_1 s)(1 + T_2 s)}$$

où $T_1$ et $T_2$ sont des constantes de temps du filtre, qui sont en relation avec l'inertie thermique du catalyseur d'oxydation, et $Td$ est un retard correspondant aux caractéristiques physiques du catalyseur d'oxydation.

15. Système selon l'une quelconque des revendications 11 à 14, prise en dépendance de la revendication 10, dans lequel la commande en boucle fermée comprend un premier contrôleur qui reçoit la différence entre le modèle de processus interne (44) et la température de sortie mesurée du catalyseur d'oxydation et délivre une première valeur de contrôleur qui est soustraite depuis une température de sortie fixée pour créer la température de sortie désirée prédéterminée $To$.

16. Système selon la revendication 15, dans lequel le premier contrôleur (46) est un filtre à décalage de premier ordre.

17. Système selon l'une quelconque des revendications 11 à 16, dans lequel la commande en boucle fermée (40) comprend un second contrôleur (48) qui commande la température de sortie désirée prédéterminée $To$ avant de la fournir au modèle de processus interne et au modèle d'état permanent.

18. Procédé pour commander une température de sortie d'un catalyseur d'oxydation pour un moteur ayant un système d'échappement incluant un catalyseur d'oxydation, comprenant les étapes consistant à :

    (i) détecter la température à une entrée du catalyseur d'oxydation ;
    (ii) mesurer un débit massique d'échappement dans le système d'échappement ;
    (iii) calculer une valeur représentant une quantité de carburant post-injecté à introduire dans le moteur pour générer une réaction exothermique dans le catalyseur d'oxydation se basant sur une température de sortie désirée prédéterminée du catalyseur d'oxydation, **caractérisé en ce que** le calcul représentant le catalyseur d'oxydation utilise un modèle d'état permanent utilisant le débit massique d'échappement, la température d'entrée du catalyseur d'oxydation et une compensation du modèle d'état permanent pour des phénomènes transitoires comprenant de calculer une fonction de compensation de dépendante de l'énergie stockée dans le catalyseur d'oxydation et le débit massique d'échappement ; et

(iv) donner instruction d'introduire dans le moteur une quantité de carburant équivalente à la valeur de carburant post-injecté,

**caractérisé en ce que** le modèle d'état permanent (10) correspond à l'équation suivante :

$$\dot{q}_{post} = \frac{1}{1 - burn\_frac_{post}}\left[\frac{\dot{m} \cdot c_p \cdot (T_o - T_i + \frac{dQ_m}{dt})}{(1 - \eta_{exh\_man}) \cdot \eta_{DOC} \cdot H} - \sum_i \dot{q}_{fi} \cdot (1 - burn\_frac_i)\right]$$

dans laquelle $\dot{q}_{post}$ est la valeur de carburant post-injecté, *To* est la température de sortie désirée prédéterminée, *Ti* est la température d'entrée du catalyseur d'oxydation, $\dot{m}$ est le débit massique d'échappement, $\sum_i \dot{q}_{fi}$ est la valeur de carburant initiale,

$$\left[\sum_i \dot{q}_{fi} \cdot (1 - burn\_frac_i)\right]$$ est la quantité totale de carburant non brûlé qui quitte le moteur à l'exception de la valeur de carburant post-injecté, (1-$\eta_{exh\_man}$) est la première fraction d'efficacité, *(1-burn_frac_i)* est la seconde fraction d'efficacité, *Cp* est la chaleur spécifique des gaz d'échappement, *H* est la valeur de chauffage du carburant et $\eta_{DOC}$ est l'efficacité exothermique pour le carburant non brûlé du catalyseur d'oxydation, et dans laquelle *dQ_m/dt* représente le changement de l'énergie stockée associée à un changement dans le débit massique d'échappement.

19. Procédé selon la revendication 18, dans lequel l'étape (iii) comprend en outre d'utiliser une valeur de carburant initiale correspondant au carburant introduit dans le moteur avant la quantité de carburant post-injecté, une première fraction d'efficacité correspondant au carburant brûlé entre le moteur du véhicule et le catalyseur d'oxydation, une seconde fraction d'efficacité correspondant au carburant brûlé dans le moteur, et une température de sortie désirée prédéterminée du catalyseur d'oxydation dans le modèle d'état permanent.

20. Procédé selon l'une quelconque des revendications 18 ou 19, dans lequel le procédé comprend en outre de stocker des valeurs calibrées dans un moyen à mémoire approprié.

21. Procédé selon la revendication 20, dans lequel l'étape (iii) comprend encore d'obtenir des valeurs pour la première fraction d'efficacité, la seconde fraction d'efficacité, et l'efficacité exothermique pour le carburant non brûlé du catalyseur d'oxydation à partir des valeurs calibrées stockées dans le moyen à mémoire.

22. Procédé selon l'une quelconque des revendications 19 à 21, dans lequel le procédé comprend encore l'étape consistant à mesurer une température de sortie du moteur et à sélectionner la première fraction d'efficacité en se basant sur la température de sortie du moteur à partir d'un groupe de valeurs calibrées stockées prédéfinies qui définissent la première fraction d'efficacité en fonction de la température de sortie du moteur.

23. Procédé selon l'une quelconque des revendications 18 à 22, dans lequel le procédé comprend encore l'étape consistant à sélectionner la valeur pour l'efficacité exothermique pour du carburant non brûlé du catalyseur d'oxydation en se basant sur la température d'entrée du catalyseur d'oxydation à partir d'un groupe de valeurs calibrées stockées prédéfinies qui définissent la valeur de l'efficacité exothermique pour le carburant non brûlé du catalyseur d'oxydation en fonction de la température d'entrée du catalyseur d'oxydation.

24. Procédé selon l'une quelconque des revendications 19 à 23, dans lequel le procédé comprend encore l'étape consistant à sélectionner la seconde fraction d'efficacité pertinente en se basant sur un angle de vilebrequin pour l'injection du moteur du véhicule à partir d'un groupe de valeurs stockées calibrées prédéfinies qui définissent la seconde fraction d'efficacité en temps que fonction de l'angle de vilebrequin pour l'injection.

**25.** Procédé selon l'une des revendications 18 à 24, dans lequel le calcul de la fonction de compensation comprend de calculer la dérivée *dQm/dt,* qui peut être représentée par la différence entre l'énergie stockée *Qm* et une valeur filtrée correspondante de *Qm.*

**26.** Procédé selon la revendication 25, dans lequel *Qm* peut être choisie en se basant sur une fonction du débit massique d'échappement.

**27.** Procédé selon l'une quelconque des revendications 18 à 26, dans lequel le procédé comprend encore l'étape consistant à mesurer une température de sortie du catalyseur d'oxydation.

**28.** Procédé selon l'une quelconque des revendications 18 à 27, dans lequel le procédé comprend encore de modifier la température de sortie désirée prédéterminée en utilisant une commande à rétroaction en boucle fermée.

**29.** Procédé selon la revendication 28, dans lequel la commande à rétroaction en boucle fermée comprend le calcul d'un modèle de processus interne.

**30.** Procédé selon la revendication 29, dans lequel le modèle de processus interne est un filtre de second ordre associé à un pur retard.

**31.** Procédé selon la revendication 30, dans lequel le filtre de second ordre est :

$$Pm = \frac{e^{-T_d s}}{(1 + T_1 s)(1 + T_2 s)}$$

où $T_1$ et $T_2$ sont des constantes de temps du filtre, qui sont en relation avec l'inertie thermique du catalyseur d'oxydation, et *Td* est un retard correspondant aux caractéristiques physiques du catalyseur d'oxydation.

**32.** Procédé selon l'une quelconque des revendications 28 à 31, prise en dépendance de la revendication 27, dans lequel la commande à rétroaction en boucle fermée comprend d'exécuter un premier calcul de contrôleur sur la différence entre le modèle de processus interne et la température de sortie mesurée du catalyseur d'oxydation, de délivrer une première valeur de contrôleur, de soustraire la première valeur de contrôleur depuis une température de sortie fixée, pour créer la température de sortie désirée prédéterminée *To*.

**33.** Procédé selon la revendication 32, dans lequel le premier calcul de contrôleur est un filtre à décalage de premier ordre.

**34.** Procédé selon l'une quelconque des revendications 28 à 33, dans lequel la commande en boucle fermée comprend d'exécuter un second calcul de contrôleur sur la température de sortie désirée prédéterminée *To* avant de la fournir au modèle de processus interne et au modèle d'état permanent.

**35.** Moteur diesel incorporant un système de commande température de sortie du catalyseur d'oxydation selon les revendications 1 à 17, pour l'utilisation dans un système de commande de régénération de filtre à particules.

Fig. 1

Fig. 2A

Fig. 2B

Fig. 2C

Fig. 3

Fig. 4

Step number 31 t1 = 600.5606 t2 = 646.3423 target = 629.403

Fig. 5

**Fig. 6**

**Fig. 7**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050284131 A